# EUROPEAN PATENT APPLICATION

(11) **EP 4 485 614 A1**
(43) Date of publication of application: **01.01.2025**
(21) Application number: 24184008.1
(22) Date of filing: 24.06.2024
(51) Int. Cl.: H01M 10/42, H01M 50/55, H01M 50/287

(54) **BATTERY PACK**

(30) Priority: 27.06.2023 KR 20230082613
(71) Applicant: SAMSUNG SDI CO., LTD., Giheung-gu Yongin-si, Gyeonggi-do 17084 (KR)
(72) Inventor: Park, Seok Ryun, 16678 Suwon-si, Gyeonggi-do (KR)
(74) Representative: Gulde & Partner

(57) **Abstract**

The present disclosure is directed to providing a battery pack with improved mechanical strength. To this end, the present disclosure provides a battery pack including a battery cell, a terrace extending from the battery cell, a protection circuit module, PCM, disposed to face the terrace, a first connection tab extending from the terrace and electrically connected to the battery cell, and a second connection tab provided between the PCM and the first connection tab and configured to electrically connect the PCM to the battery cell.

## Description

### BACKGROUND

### 1. Field of the Invention

Aspects of embodiments of the present disclosure relate to a battery pack.

### 2. Discussion of Related Art

Generally, as the demand for portable electronic products such as laptops, camcorders, and mobile phones increases rapidly and the commercialization of robots, electric cars, and the like begins in earnest, research on battery packs capable of repeated charging and discharging is actively underway.

A battery pack may be configured to include a battery cell for supplying power and a protection circuit module (PCM) electrically connected to the battery cell to continuously detect and control values such as voltage, current, and temperature. This battery pack requires designing a connection structure between the battery cell and the PCM with sufficient reliability against external impacts.

The above-described information disclosed in the technology that forms the background of the present disclosure is only intended to improve understanding of the background of the present disclosure, and thus may include information that does not constitute the related art.

### SUMMARY OF THE INVENTION

An aspect of embodiments of the present disclosure is directed to a battery pack with high reliability and improved mechanical strength.

These and other aspects and features of the present disclosure will be described in or will be apparent from the following description of some embodiments of the present disclosure.

According to an aspect of the present disclosure, a battery pack includes a battery cell; a terrace extending from the battery cell; a protection circuit module (PCM) disposed to face the terrace; a first connection tab extending from the terrace and electrically connected to the battery cell; and a second connection tab provided between the PCM and the first connection tab and configured to electrically connect the PCM to the battery cell.

In one embodiment, the second connection tab may include: a first tab body connected to the first connection tab; a second tab body disposed to be spaced apart from the first tab body and connected to the PCM; and a support member disposed between the first tab body and the second tab body and configured to support the first tab body and the second tab body to be rotatable relative to each other.

In one embodiment, the support member may include: a plurality of bridges configured to be bent and deformed in conjunction with a change in an angle between the first tab body and the second tab body and disposed to be spaced apart from each other in a first direction; and a notch configured to pass through the second connection tab in a second direction perpendicular to the first direction.

In one embodiment, the notch may be disposed between a pair of neighboring bridges.

In one embodiment, the bridges may be formed as a pair, and a width of the bridge parallel to the first direction may be greater than 1 mm and less than or equal to 1.6 mm.

In one embodiment, the pair of bridges may be respectively disposed at both ends of the second connection tab.

In one embodiment, a thickness of the bridge parallel to the second direction may be greater than or equal to 0.1 mm and less than or equal to 0.127 mm.

In one embodiment, the first connection tab may extend in a direction moving away from the terrace and an end of the first connection tab may be bent in a direction approaching the terrace.

In one embodiment, the first connection tab may be elastically deformable.

In one embodiment, the battery pack may further include a fixing tape disposed between the terrace and the PCM and configured to fix the PCM to the terrace.

In one embodiment, the PCM may include a first surface disposed to face the fixing tape and a second surface disposed at an opposite side of the first surface, and the second connection tab may be disposed on the first surface.

In one embodiment, an electronic device may be mounted on the first surface of the PCM.

In one embodiment, the fixing tape may include: an adhesive region disposed to face the PCM and to which the electronic device is adhered.

In one embodiment, the fixing tape may include: a separation region disposed to face the second connection tab and configured to be separated from the second connection tab.

In one embodiment, an area of the separation region may be larger than an area of the second connection tab disposed to face the fixing tape.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a battery pack according to one embodiment of the present disclosure.
FIG. 2 is an exploded perspective view schematically illustrating the configuration of the battery pack according to one embodiment of the present disclosure.
FIG. 3 is a cross-sectional view schematically illustrating the configuration of the battery pack according to one embodiment of the present disclosure.
FIG. 4 is a perspective view schematically illustrating a configuration of a second connection tab according to one embodiment of the present disclosure.
FIG. 5 is a front view schematically illustrating the configuration of the second connection tab according to one embodiment of the present disclosure.
FIG. 6 is a side view schematically illustrating the configuration of the second connection tab according to one embodiment of the present disclosure.

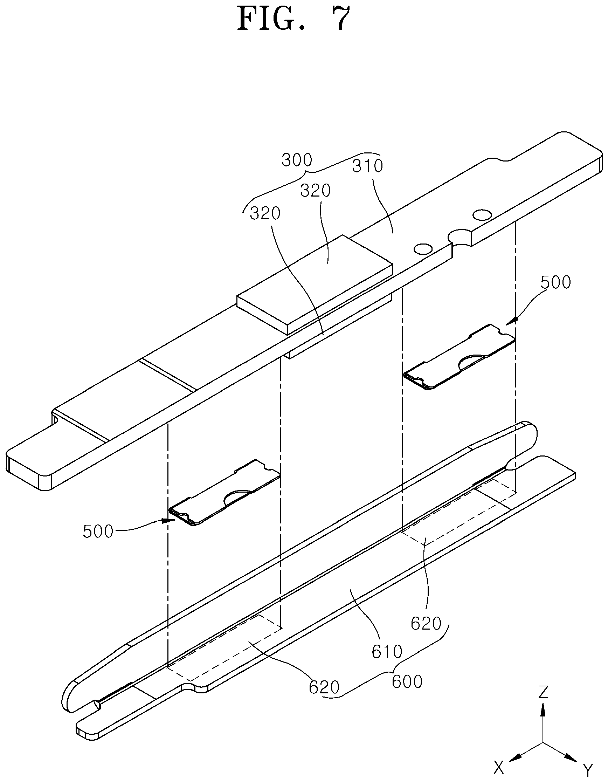

FIG. 7 is a perspective view schematically illustrating a configuration of a fixing tape according to one embodiment of the present disclosure.

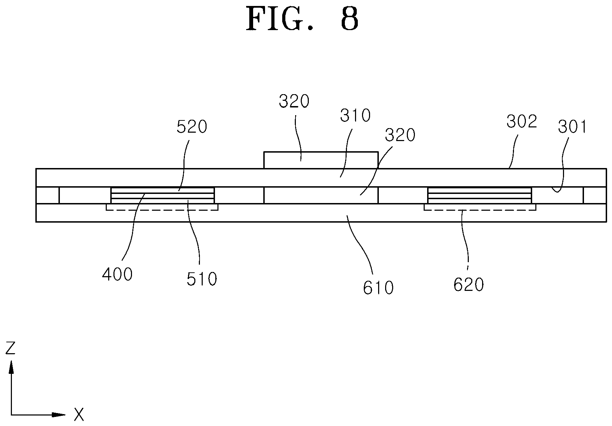

FIG. 8 is a front view schematically illustrating the configuration of the fixing tape according to one embodiment of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

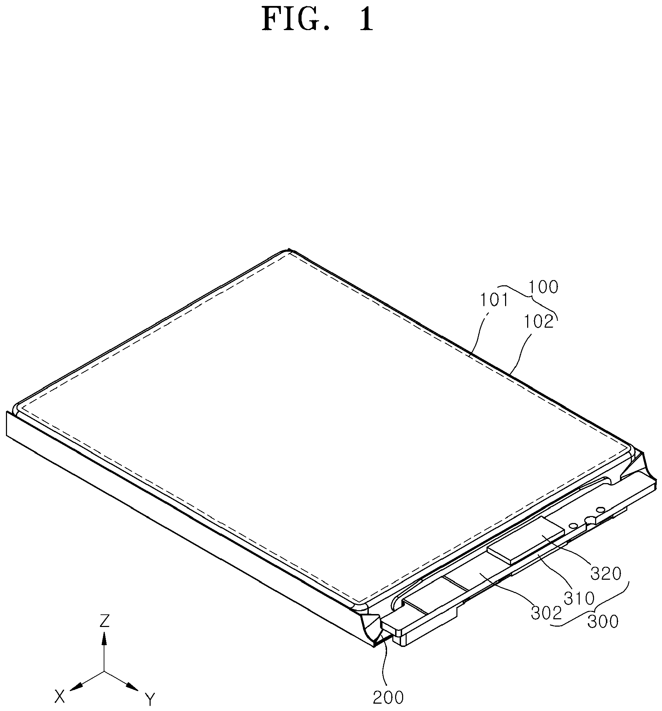

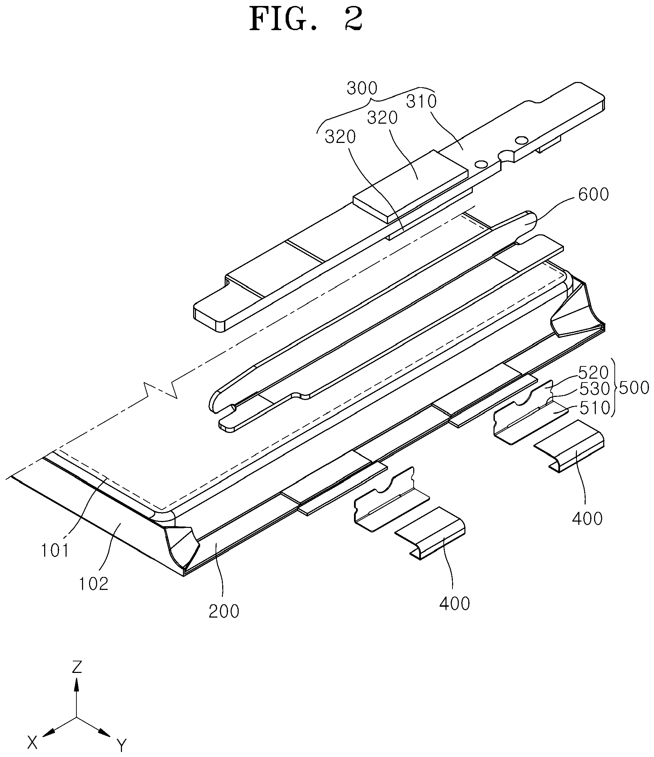

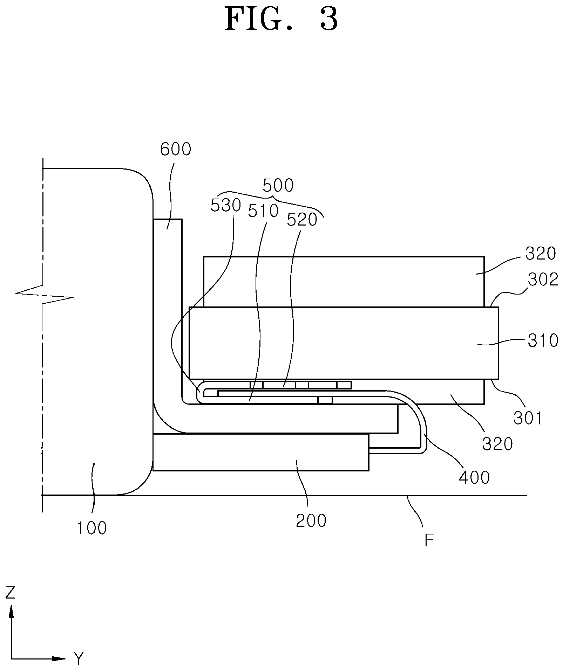

FIG. 1 is a perspective view schematically illustrating a configuration of a battery pack according to one embodiment of the present disclosure, FIG. 2 is an exploded perspective view schematically illustrating the configuration of the battery pack according to one embodiment of the present disclosure, and FIG. 3 is a cross-sectional view schematically illustrating the configuration of the battery pack according to one embodiment of the present disclosure.

Referring to FIGS. 1 to 3, a battery pack according to the present embodiment includes a battery cell 100, a terrace 200, a protection circuit module (PCM) 300, a first connection tab 400, and a second connection tab 500.

The battery cell 100 is a unit structure that stores and supplies power and may be a lithium secondary battery capable of charging and discharging a predetermined amount of power. The battery cell 100 according to the present embodiment may be a pouch type battery cell including an electrode assembly 101 and an exterior material 102 surrounding the electrode assembly 101.

Although not illustrated in the drawings, the electrode assembly 101 may be formed as a winding type in which first and second electrode plates and a separator interposed between the first and second electrode plates are wound in the form of a roll or may be formed as a stacking type in which the first and second electrode plates and the separator are stacked on top of one another.

The terrace 200 extends from the battery cell 100 and supports the PCM 300, which will be described below, relative to the battery cell 100. The terrace 200 according to the present embodiment may be formed to have the shape of a plate that horizontally extends from an end surface of the battery cell 100 in a direction parallel to a length direction of the battery cell 100. The terrace 200 may be integrally formed with the battery cell 100 or may be produced separately from the battery cell 100 and then coupled to the battery cell 100. A lower surface of the terrace 200 may be disposed to be spaced a predetermined distance apart from a floor surface F.

The PCM 300 is disposed to face the terrace 200 and is electrically connected to the battery cell 100 via the first connection tab 400 and the second connection tab 500 which will be described below. The PCM 300 may form a path for the charge/discharge current of the battery cell 100 or perform a protective operation for preventing overheating or explosions that occur due to overheating, overcharging, overdischarging or the like of the battery cell 100.

The PCM 300 according to the present embodiment may include a substrate 310 formed in a flat plate shape having opposing first and second surfaces 301 and 302, and an electronic device 320 mounted on at least one of the first surface 301 and the second surface 302 of the substrate 310 to form a path for the charge/discharge current of the battery cell 100 or perform a protective operation for preventing overheating or explosions that occur due to overheating, overcharging, overdischarging or the like of the battery cell 100.

The first surface 301 of the substrate 310 may be disposed to face downward and face an upper surface of the terrace 200. The second surface 302 of the substrate 310 may be disposed to face upward and face an upper space of the battery cell 100.

The first connection tab 400 extends from the terrace 200 and is electrically connected to the battery cell 100. The first connection tab 400 may be formed as a pair of first connection tabs 400. One end of one of the pair of first connection tabs 400 and one end of the other of the pair of first connection tabs 400 may be respectively connected to the first and second electrode plates of the battery cell 100 that have different polarities. Here, when the first electrode plate is a negative electrode and the second electrode plate is a positive electrode, the first connection tab 400 connected to the first electrode plate may be formed of a nickel material, and the first connection tab 400 connected to the second electrode plate may be formed of an aluminum material.

The first connection tab 400 may be formed to have the form of a thin sheet and may protrude from an end of the terrace 200 toward the outside of the terrace 200. The first connection tab 400 may extend in a direction moving away from the terrace 200 in the length direction of the battery cell 100. The first connection tab 400 may be elastically deformable. After the first connection tab 400 is fastened to the second connection tab 500, which will be described below, as the PCM 300 is seated on the terrace 200, an end of the first connection tab 400 may be bent once in a direction approaching the terrace 200. Accordingly, after the task of fastening the first connection tab 400 to the second connection tab 500, which will be described below, is completed, the position of the PCM 300 may be freely changed by the elastic deformation of the first connection tab 400 itself and packing efficiency may be further improved.

The second connection tab 500 is provided between the PCM 300 and the first connection tab 400 and electrically connects the PCM 300 to the battery cell 100. That is, the second connection tab 500 may serve as a component that, between the PCM 300 and the first connection tab 400, provides an electrical connection between the PCM 300 and the battery cell 100. The second connection tab 500 may be formed as a pair of second connection tabs 500. Each of the pair of second connection tabs 500 may be connected to one of the first connection tabs 400. The pair of second connection tabs 500 may be connected at different positions on the first surface 301 of the PCM 300.

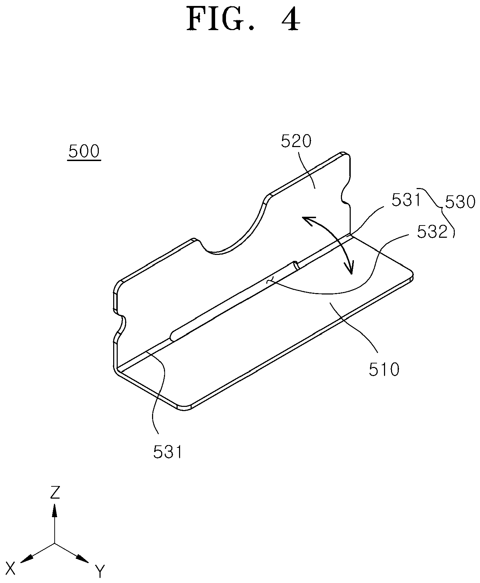

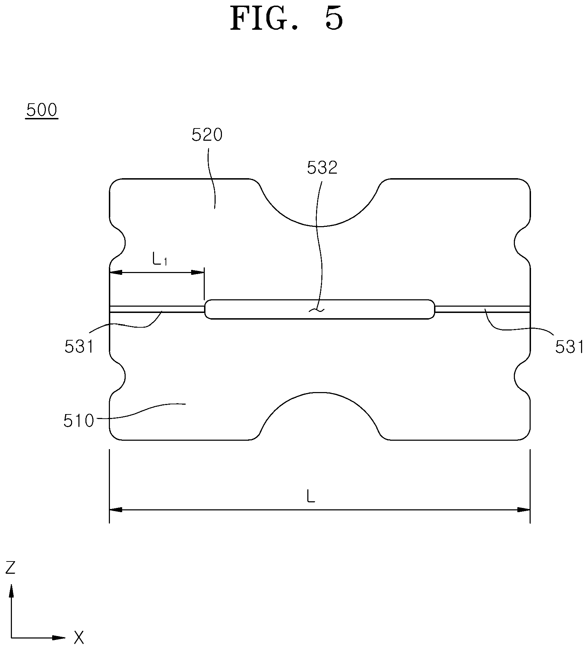

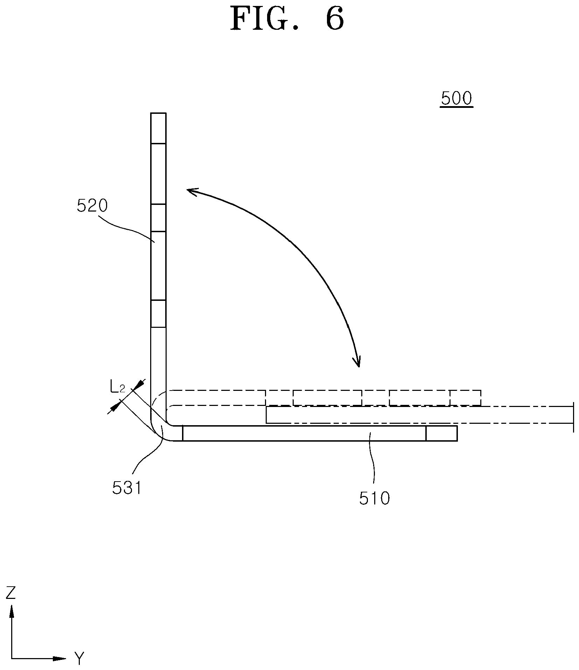

FIG. 4 is a perspective view schematically illustrating a configuration of a second connection tab according to one embodiment of the present disclosure, FIG. 5 is a front view schematically illustrating the configuration of the second connection tab according to one embodiment of the present disclosure, and FIG. 6 is a side view schematically illustrating the configuration of the second connection tab according to one embodiment of the present disclosure.

Referring to FIGS. 4 to 6, the second connection tab 500 according to the present embodiment may include a first tab body 510, a second tab body 520, and a support member 530.

The first tab body 510 forms an exterior of one side of the second connection tab 500 and is connected to the first connection tab 400. The first tab body 510 according to the present embodiment may be formed to be substantially flat plate-shaped. The first tab body 510 may be formed of an electrically conductive material such as nickel. An end of the first connection tab 400 may be in contact with and fixed to an inner surface or an edge surface of the first tab body 510. The first connection tab 400 may be fixed to the first tab body 510 by various types of coupling methods such as adhesion, welding, and compression. In this case, since both the first tab body 510 and the first connection tab 400 are formed of an electrically conductive material, the first tab body 510 and the first connection tab 400 may be electrically connected.

The second tab body 520 forms an exterior of the other side of the second connection tab 500 and is connected to the PCM 300. The second tab body 520 may be disposed to be spaced apart from the first tab body 510 and may be connected to the first tab body 510 via the support member 530 which will be described below. The second tab body 520 according to the present embodiment may be formed to be substantially flat plate-shaped. The second tab body 520 may have the same shape as the first tab body 510 or may have a different shape from the first tab body 510. The second tab body 520 may be formed of an electrically conductive material such as nickel. An outer surface of the second tab body 520 may come in contact with the first surface 301 of the PCM 300 and may be fixed to the first surface 301 by various types of coupling methods such as welding and adhesion. In this case, since the second tab body 520 is formed of an electrically conductive material, the second tab body 520 may be electrically connected to the PCM 300. The second tab body 520 may be supported to be rotatable relative to the first tab body 510 by the support member 530 which will be described below. Accordingly, after the second tab body 520 is connected to the PCM 300, an angle of installation of the second tab body 520 relative to the first tab body 510 may be changed, and the PCM 300 may be guided to be seated on the terrace 200.

The support member 530 is disposed between the first tab body 510 and the second tab body 520 and connects the first tab body 510 and the second tab body 520 to each other. The support member 530 may be provided to have a deformable shape and may support the first tab body 510 and the second tab body 520 to be rotatable relative to each other by its shape deformation.

The support member 530 according to the present embodiment may include a bridge 531 and a notch 532.

The bridge 531 is disposed between the first tab body 510 and the second tab body 520 and is bent and deformed in conjunction with a change in the angle between the first tab body 510 and the second tab body 520. The bridge 531 may be formed as a plurality of bridges 531. The plurality of bridges 531 may be disposed to be spaced apart from each other in a first direction. Here, the first direction may be a direction parallel to a width direction of the first tab body 510 and the second tab body 520, that is, the X-axis direction based on FIGS. 4 to 6. Hereinafter, an example in which the bridge 531 is formed as a pair of bridges 531 will be described.

The bridge 531 according to the present embodiment may be formed to have the shape of a plate having both ends respectively connected to one end of the first tab body 510 and one end of the second tab body 520 that face each other. The pair of bridges 531 may be disposed at both ends of the second connection tab 500. That is, the pair of bridges 531 may be disposed to be maximally spaced apart in the width direction of the first tab body 510 and the second tab body 520 within a range of the entire width L of the first tab body 510 and the second tab body 520. The bridge 531 may be formed of the same material as the first tab body 510 and the second tab body 520. When the relative angle between the first tab body 510 and the second tab body 520 is changed, the bridge 531 may be bent and deformed in such a way that both ends rotate in a direction approaching or moving away from each other about the width direction of the first tab body 510 and the second tab body 520.

A width L1 of each bridge 531 that is parallel to the first direction, that is, a length direction of the first tab body 510 and the second tab body 520, may be greater than 1 mm and less than or equal to 1.6 mm. In this case, the entire width L of the first tab body 510 and the second tab body 520 may be about 5.6 mm. When the width L1 of the bridge 531 is less than or equal to 1 mm, the rigidity of the bridge 531 is excessively weakened, and there is great risk of damage to the bridge 531 when a drop impact occurs. Meanwhile, when the width L1 of the bridge 531 exceeds 1.6 mm, the size of a load required for bending and deformation of the bridge 531 is excessively increased.

A thickness L2 of the bridge 531 that is parallel to a second direction perpendicular to the first direction, that is, a direction vertically passing through both surfaces of the bridge 531, may be greater than or equal to 0.1 mm and less than or equal to 0.127 mm. When the thickness L2 of the bridge 531 is less than 0.1 mm, the rigidity of the bridge 531 is excessively weakened, and there is great risk of damage to the bridge 531 when a drop impact occurs. Meanwhile, when the thickness L2 of the bridge 531 exceeds 0.127 mm, the size of a load required for bending and deformation of the bridge 531 is excessively increased.

The notch 532 is formed to have the shape of a hole that passes through the second connection tab 500 in the second direction. The notch 532 may serve as a component that induces the smooth bending and deformation of the bridge 531 due to a part of the structure of the second connection tab 500 being removed. The notch 532 according to the present embodiment may be disposed between the pair of bridges 531. The width and thickness of the notch 532 may vary depending on the width L1 and the thickness L2 of the bridge 531. When three or more bridges 531 are formed, the number of formed notches 532 may be one less than the number of bridges 531, and the notches 532 may be disposed to be spaced apart from each other in a direction parallel to the first direction, that is, the length direction of the first tab body 510 and the second tab body 520. In this case, each notch 532 may be disposed between a pair of neighboring bridges 531. That is, the bridges 531 and the notches 532 may be alternately disposed with each other in the first direction.

The battery pack according to the present embodiment may further include a fixing tape 600. The fixing tape 600 may have the form of a sheet having a surface on which an adhesive material is applied. The fixing tape 600 may have a shape that is bent in a substantially L-shape, and an inner surface of the fixing tape 600 may be seated on the end surface of the battery cell 100 and the upper surface of the terrace 200. An outer surface of the fixing tape 600 that is seated on the upper surface of the terrace 200 may be disposed to face the first surface 301 of the PCM 300, and an outer surface of the fixing tape 600 that is seated on the end surface of the battery cell 100 may be disposed to face a side surface of the PCM 300.

The fixing tape 600 according to the present embodiment may include an adhesive region 610 and a separation region 620.

The adhesive region 610 may refer to a region on which an adhesive material is applied among the entire region of the outer surface of the fixing tape 600 that is disposed to face the PCM 300. As the PCM 300 is disposed to face the terrace 200, at least a partial area of the adhesive region 610 according to the present embodiment may be disposed to face the electronic device 320 mounted on the first surface 301 of the PCM 300 and may directly come in contact with the electronic device 320. In this case, as an adhesive material is applied on a surface of the adhesive region 610, the electronic device 320 may be adhered to the surface of the adhesive region 610. Accordingly, the PCM 300 may be stably fixed on the terrace 200 by the adhesive force between the adhesive region 610 and the electronic device 320.

The separation region 620 may refer to a region on which the adhesive material is not applied among the entire region of the outer surface of the fixing tape 600 that is disposed to face the PCM 300. As the PCM 300 is disposed to face the terrace 200, the separation region 620 according to the present embodiment may be disposed to face the second connection tab 500 connected to the first surface 301 of the PCM 300 and may directly come in contact with the first tab body 510 of the second connection tab 500. An area of the separation region 620 may be formed larger than an area of the second connection tab 500 disposed to face the fixing tape 600, that is, an area of the first tab body 510. Since the adhesive material is not applied on a surface of the separation region 620, the second connection tab 500 may be separated from the separation region 620. Accordingly, by the separation region 620 forming a local non-adhesive section in a region that directly comes in contact with the second connection tab 500 among the entire region of the fixing tape 600, when a drop impact is applied to the second connection tab 500, the adhesive force between the fixing tape 600 and the second connection tab 500 can be prevented from acting as an additional load on the bridge 531, and the robustness of the bridge 531 against the drop impact can be improved.

Hereinafter, the present disclosure will be described in more detail using specific examples of the present disclosure. The following examples are only provided to help understanding of the present disclosure, and the scope of the present disclosure is not limited thereto.

### [Example 1]

A battery pack including a second connection tab 500 in which the entire width L of the first tab body 510 and the second tab body 520 is 5.6 mm, the width L1 of the bridge 531 is 1 mm, and the thickness L2 of the bridge 531 is 0.1 mm, and the fixing tape 600 only having an adhesive region 610 without a separation region 620 was produced.

### [Example 2]

A battery pack was produced in the same manner as in Example 1 except that the width L1 of the bridge 531 was changed to 1.5 mm.

### [Example 3]

A battery pack was produced in the same manner as in Example 1 except that the width L1 of the bridge 531 was changed to 1.6 mm.

### [Example 4]

A battery pack was produced in the same manner as in Example 1 except that the width L1 of the bridge 531 was changed to 2.3 mm and the notch 532 was not formed.

### [Example 5]

A battery pack was produced in the same manner as in Example 1 except that the thickness L2 of the bridge 531 was changed to 0.127 mm.

### [Example 6]

A battery pack was produced in the same manner as in Example 5 except that the width L1 of the bridge 531 was changed to 1.5 mm.

### [Example 7]

A battery pack was produced in the same manner as in Example 5 except that the width L1 of the bridge 531 was changed to 1.6 mm.

### [Example 8]

A battery pack was produced in the same manner as in Example 5 except that the width L1 of the bridge 531 was changed to 2.3 mm and the notch 532 was not formed.

### [Example 9]

A battery pack was produced in the same manner as in Example 1 except that the thickness L2 of the bridge 531 was changed to 0.13 mm.

### [Example 10]

A battery pack was produced in the same manner as in Example 2 except that the fixing tape 600 was changed to have a separation region 620.

In Examples 1 to 3, 5 to 7, and 10, warping of the first tab body 510 and the second tab body 520 or warping of the substrate 310 of the PCM 300 was not observed in the bending deformation process of the bridge 531.

In Examples 4, 8, and 9, warping of the first tab body 510 and the second tab body 520 or warping of the substrate 310 of the PCM 300 was observed in the bending deformation process of the bridge 531. That is, it was confirmed that, when the width L1 of the bridge 531 exceeded 1.6 mm or the thickness L2 of the bridge 531 exceeded 0.127 mm, an excessive load was required for adjustment of an angle between the first tab body 510 and the second tab body 520, and the production process was not smoothly performed.

### [Experimental Example 1]

A continuous drop test was performed on Examples 1 to 3, 5 to 7, and 10 excluding Examples 4, 8, and 9, among the examples described above.

The continuous drop test was performed by repeatedly dropping the battery pack according to each example from a height of about 1 m 400 times and observing whether the bridge 531 was broken at the 200^{th} drop, 250^{th} drop, 300^{th} drop, 350^{th} drop, and 400^{th} drop. The continuous drop test for each example was performed in parallel for sixteen identical battery packs.

Table 1 shows the results of evaluating the performance of the battery pack according to each example through the continuous drop test.

**[Table 1]**

| | 200^{th} | 250^{th} | 300^{th} | 350^{th} | 400^{th} |
|---|---|---|---|---|---|
| Example 1 | 0/16 | 2/16 | 2/16 | 4/16 | 6/16 |
| Example 2 | 0/16 | 0/16 | 0/16 | 2/16 | 2/16 |
| Example 3 | 0/16 | 0/16 | 0/16 | 1/16 | 2/16 |
| Example 5 | 0/16 | 0/16 | 1/16 | 3/16 | 4/16 |
| Example 6 | 0/16 | 0/16 | 0/16 | 1/16 | 2/16 |
| Example 7 | 0/16 | 0/16 | 0/16 | 1/16 | 1/16 |
| Example 10 | 0/16 | 0/16 | 0/16 | 0/16 | 1/16 |

Comparing Examples 1, 2, 3, 5, 6, and 7 using Table 1 above, it can be confirmed that, in Examples 1 and 5 in which the width L1 of the bridge 531 was 1 mm, the percentage of battery packs damaged due to drop impacts was higher than in Examples 2, 3, 6, and 7 in which the width L1 of the bridge 531 was larger than 1 mm.

Comparing Examples 2, 6, and 10, it can be confirmed that, in Example 10 in which the separation region 620 was formed in the fixing tape 600, reliability against drop impacts was relatively higher than in Examples 2 and 6 in which the separation region 620 was not formed in the fixing tape 600.

In accordance with one or more embodiments of the present disclosure, since sufficient rigidity is secured for a bridge that is bent and deformed in a process of connecting a battery cell and a PCM, stable power supply can be maintained even in a situation in which an external impact is repeatedly applied.

Also, In accordance with one or more embodiments of the present disclosure, by a separation region forming a local non-adhesive section in a region that directly comes in contact with a second connection tab among the entire region of a fixing tape, when a drop impact is applied to the second connection tab, the adhesive force of the fixing tape can be prevented from acting as an additional load on the bridge, and damage to the bridge due to the drop impact can be prevented.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative, and it should be understood that various modifications and equivalent other embodiments can be derived by those skilled in the art on the basis of the embodiments.

Therefore, the technical scope of the present disclosure is defined by the appended claims.

## Claims

1. A battery pack comprising:
a battery cell (100);
a terrace (200) extending from the battery cell (100);
a protection circuit module, PCM, (300) disposed to face the terrace (200);
a first connection tab (400) extending from the terrace (200) and electrically connected to the battery cell (100); and
a second connection tab (500) provided between the PCM (300) and the first connection tab (400) and configured to electrically connect the PCM (300) to the battery cell (100).

2. The battery pack according to claim 1, wherein the second connection tab (500) comprises:
a first tab body (510) connected to the first connection tab (400);
a second tab body (520) disposed to be spaced apart from the first tab body (510) and connected to the PCM (300); and
a support member (530) disposed between the first tab body (510) and the second tab body (520) and configured to support the first tab body (510) and the second tab body (520) to be rotatable relative to each other.

3. The battery pack according to claim 2, wherein the support member (530) comprises:
a plurality of bridges (531) configured to be bent and deformed in conjunction with a change in an angle between the first tab body (510) and the second tab body (520) and disposed to be spaced apart from each other in a first direction (X); and
a notch (532) configured to pass through the second connection tab (500) in a second direction perpendicular to the first direction (X).

4. The battery pack according to claim 3, wherein the notch (532) is disposed between a pair of neighboring bridges (531).

5. The battery pack according to claim 3 or 4, wherein the bridges (531) are formed as a pair, and a width of the bridge (531) parallel to the first direction (X) is greater than 1 mm and less than or equal to 1.6 mm.

6. The battery pack according to claim 5, wherein the pair of bridges (531) are respectively disposed at both ends of the second connection tab (500).

7. The battery pack according to claim 5 or 6, wherein a thickness of the bridge (531) parallel to the second direction is greater than or equal to 0.1 mm and less than or equal to 0.127 mm.

8. The battery pack according to any one of claims 1 to 7, wherein the first connection tab (400) extends in a direction pointing away from the terrace (200) and an end of the first connection tab (400) is bent in a direction approaching the terrace (200).

9. The battery pack according to any one of claims 1 to 8, wherein the first connection tab (400) is elastically deformable.

10. The battery pack according to any one of claims 1 to 9, further comprising a fixing tape (600) disposed between the terrace (200) and the PCM (300) and configured to fix the PCM (300) to the terrace (200).

11. The battery pack according to claim 10, wherein the PCM (300) comprises:
a first surface (301) disposed to face the fixing tape (600); and
a second surface (302) disposed at an opposite side of the first surface (301),
wherein the second connection tab (500) is disposed on the first surface (301).

12. The battery pack according to claim 11, wherein an electronic device (320) is mounted on the first surface (301) of the PCM (300).

13. The battery pack according to claim 11 or 12, wherein the fixing tape (600) comprises:
an adhesive region (610) disposed to face the PCM (300) and to which the electronic device (320) is adhered.

14. The battery pack according to any one of claims 11 to 13, wherein the fixing tape (600) comprises:
a separation region (620) disposed to face the second connection tab (500) and configured to be separated from the second connection tab (500).

15. The battery pack according to claim 12, wherein an area of the separation region (620) is larger than an area of the second connection tab (500) disposed to face the fixing tape (600).
